# EUROPÄISCHE PATENTSCHRIFT

(11) **EP 3 802 457 B1**
(45) Veröffentlichungstag und Bekanntmachung des Hinweises auf die Patenterteilung: **26.01.2022**
(21) Anmeldenummer: 19730741.6
(22) Anmeldetag: 11.06.2019
(51) Int. Cl.: C04B 33/00, B02C 15/00, B02C 25/00, C04B 33/02, C09C 1/00, C04B 35/626

(54) **TROCKENAUFBEREITUNG VON KAOLIN BEI DER HERSTELLUNG VON HPA**
DRY PREPARATION OF KAOLIN IN THE PRODUCTION OF HPA
TRAITEMENT À SEC DE KAOLIN DANS LA PRODUCTION DE HPA

(30) Priorität: 08.06.2018 DE 102018209210; 09.01.2019 DE 102019200191
(43) Veröffentlichungstag der Anmeldung: 14.04.2021
(73) Patentinhaber: SMS Group GmbH, 40237 Düsseldorf (DE)
(72) Erfinder: MUSTAFI, Emir, 40699 Erkrath (DE); GIER-ZUCKETTO, Joachim, 52146 Würselen (DE); SCHRIEWER, Thorsten, 45470 Mülheim/Ruhr (DE); STASTNY, Raffael, 1070 Wien (AT)
(74) Vertreter: Klüppel, Walter
(86) Internationale Anmeldenummer: PCT/EP2019/065154
(87) Internationale Veröffentlichungsnummer: WO 2019/234257

(56) Entgegenhaltungen:
- EP-A2- 0 292 739
- EP-A2- 0 510 890
- WO-A1-03/028893
- WO-A1-2015/051925
- CN-A- 108 046 750
- CZ-B6- 306 516
- DE-A1- 19 806 895
- DE-A1-102006 028 547
- DE-B- 1 088 404
- RU-C1- 2 187 387

## Beschreibung

### Technisches Gebiet

Die Erfindung betrifft ein Verfahren zur Aufbereitung von Rohkaolin, das eine Stoffmischung aus zumindest Kaolin als eine erste Fraktion und einer zweiten zumindest Quarz umfassenden Fraktion ist.

### Hintergrund der Erfindung

Kaolin, auch als "Porzellanerde" oder Porzellanton" bezeichnet, ist ein natürlich vorkommendes Industriemineral, das vielseitig Anwendung findet, so etwa in der Keramik-, Kunststoff- und Papierindustrie, bei der Herstellung von Lacken, Farben und Gummi sowie in der Kosmetik- und Pharmaindustrie. Durch den hohen Aluminiumoxidgehalt fungiert Kaolin zudem als Rohstoffträger für hochreines Aluminiumoxid ("High Purity Alumina", HPA). HPA gewinnt durch Anwendungen in der Elektronik, beispielsweise bei der Herstellung von LED-Leuchten und Displays, zunehmend an Bedeutung.

Kaolin wird aus einem Abbauprodukt gewonnen, das als "Rohkaolin" bezeichnet wird und zumeist im Wesentlichen aus dem reinen Kaolin, auch als "Kaolinit" bezeichnet, Quarz und Glimmer besteht. Der herkömmliche Prozess zur Gewinnung des Kaolins basiert auf einer Nassaufbereitung. Zu diesem Zweck wird der Rohkaolin nach einer mechanischen Zerkleinerung mittels eines Brechers in einer Waschtrommel aufgeschlämmt, wodurch eine Suspension aus dem Rohmaterial hergestellt wird. Quarzsand und grober Glimmer setzen sich ab. Durch Mehrdecksiebe wird die Kaolinfraktion nass gesiebt. Um die Ausbeute zu erhöhen, kann das Produkt mittels Hydrozyklonen nochmals getrennt werden. Üblicherweise werden weitere Siebungen durchgeführt, um Kornbänder wohldefinierter Korn- bzw. Partikelgrößen zu erreichen und/oder Verunreinigungen sowie Rückstände zu entfernen, bevor das aufbereitete Kaolin als Feststoff aus der wässrigen Lösung gewonnen wird. Dies geschieht aufwendig mit Hilfe von Filterpressen.

Bekannte Nassverfahren zur Aufbereitung von Rohkaolin sind beispielsweise in der DE 1 088 404 A, DE 690 30 020 T2 und EP 0 193 109 B1 beschrieben.

Die Herstellung und Verarbeitung der Rohkaolin-Suspension, sowie die Rückgewinnung des Kaolins als Feststoff sind Ressourcen- und Energieaufwändig. Das Verfahren ist komplex. Der zeitliche Aufwand, die notwendigen Ressourcen und Kosten lassen sich nicht ohne weiteres reduzieren.

Die WO 2015/051925 A1 beschreibt ein Verfahren und eine Vorrichtung zum Aufbereiten und Trennen eines Materials aus einem verbundenen Mehrstoffsystem. Die CN 108046750 A beschreibt ein Herstellungsverfahren für superfeines kalziniertes Kaolinpulver. Die EP 0 510 890 A2 beschreibt eine Vorrichtung zum Trockenmahlen von Feststoffen. Die RU 2 187 387 C1 beschreibt ein Verfahren zur trockenen Anreicherung von nichtmetallischen Mineralien, wie etwa Kaolin. Die CZ 2013-446 A3 beschreibt ein Verfahren zur Herstellung und Verwendung von Kaolin-Glimmer.

### Darstellung der Erfindung

Eine Aufgabe der Erfindung besteht darin, die Aufbereitung von Rohkaolin zu verbessern, insbesondere den zeitlichen Aufwand sowie den Ressourcen- und Energieverbrauch zu reduzieren.

Gelöst wird die Aufgabe mit einem Verfahren zur Aufbereitung von Rohkaolin mit den Merkmalen des Anspruchs 1. Vorteilhafte Weiterbildungen folgen aus den Unteransprüchen, der folgenden Darstellung der Erfindung sowie der Beschreibung bevorzugter Ausführungsbeispiele.

Das erfindungsgemäße Verfahren dient der Aufbereitung von Rohkaolin, der eine Stoffmischung aus zumindest Kaolin bzw. Kaolinit als eine erste Fraktion und einer zumindest Quarz umfassenden zweiten Fraktion ist.

Die Bezeichnungen "Kaolin" und "Kaolinit" werden hierin synonym verwendet und bezeichnen das darunter bekannte Schichtsilikat aus der Kaolinit-Serpentin-Gruppe mit der kristallchemischen Zusammensetzung Al₄[(OH)₈|Si₄O₁₀]. Die beiden Fraktionen bestehen aus Partikeln, worunter hierin kornartige Aggregate der entsprechenden Bestandteile zu verstehen sind. Aufgrund der oben definierten Zusammensetzung des Rohkaolins sind die Partikel der ersten Fraktion hierbei tendenziell leichter bzw. feiner als die Partikel der zweiten Fraktion. Unter Aufbereitung wird hierin insbesondere das Trennen des Kaolins von anderen Bestandteilen des Rohkaolins, insbesondere Quarz und gegebenenfalls Glimmer, verstanden. Ferner kann die Aufbereitung die Herstellung bestimmter Partikel- bzw. Korngrößen des Kaolins umfassen.

Die Aufbereitung des Rohkaolins erfolgt gemäß der Erfindung zumindest teilweise in einer Mahl- und Trennungsvorrichtung, die einen Mahlabschnitt und einen ersten Trennungsabschnitt aufweist. Es sei darauf hingewiesen, dass die Bezeichnungen "erste" und "zweite" keine Ordnung, Reihenfolge oder dergleichen implizieren, sondern lediglich der sprachlichen Unterscheidung dienen.

Das Rohkaolin wird zunächst dem Mahlabschnitt zugeführt, in dem die erste Fraktion durch Zermahlen zumindest teilweise, jedoch vorzugsweise im Wesentlichen vollständig, aus dem Rohkaolin herausgelöst wird. Zu diesem Zweck kann die Mahl- und Trennungsvorrichtung einen Zufuhrabschnitt aufweisen, über den das Rohkaolin einem durch eine Einhausung definierten Innenraum der Vorrichtung zugeführt wird. Die Mahl- und Trennungsvorrichtung kann ungefähr einen axialsymmetrischen Aufbau aufweisen, wobei sich der Zufuhrabschnitt in diesem Fall vorzugsweise zentral im oberen Bereich der Vorrichtung befindet, so dass das Rohkaolin im Wesentlichen zentral in Schwerkraftrichtung in den Innenraum der Mahl- und Trennungsvorrichtung hineinbefördert wird. Es sei darauf hingewiesen, dass die Bezeichnungen "oben", "unten" und dergleichen relativ zur Schwerkraftrichtung zu sehen und durch die bestimmungsgemäße Anwendung der Mahl- und Trennungsvorrichtung wohldefiniert sind.

Nachdem das Rohkaolin im Mahlabschnitt gemahlen und die erste Fraktion aus dem Rohkaolin herausgelöst ist, wird die erste Fraktion im ersten Trennungsabschnitt von der zweiten Fraktion getrennt.

Das Aufbereitungsverfahren mit Hilfe der Mahl- und Trennungsvorrichtung kommt vollständig ohne eine aufwendige Nassphase aus. Bei der Aufbereitung des Kaolins, bis hin zur etwaigen Herstellung hochreinen Aluminiumoxyds, können diverse Prozessschritte entfallen, so etwa die Filtration und die Kalzinierung/Trocknung des Produkts. Dadurch lässt sich eine deutliche Vereinfachung des Aufbereitungsprozesses realisieren. Das Verfahren ist energie- und ressourcenschonend sowie kostengünstig durchführbar.

Da die hierin dargelegte Aufbereitung ohne eine aufwendige Nassphase auskommt, erfolgt diese - insbesondere das Mahlen und die Trennung der ersten Fraktion von der zweiten Fraktion sowie die Selektion nach der Feinheit der Partikel - ohne Herstellung einer Suspension aus dem Rohkaolin.

Vorzugsweise erfolgt die Trennung im ersten Trennungsabschnitt mittels eines Gasstroms, beispielsweise Luftstroms, der eine (Vektor-)Komponente entgegen der Schwerkraftrichtung aufweist. Der Gasstrom ist somit zumindest teilweise, vorzugsweise jedoch im Wesentlichen vollständig, entgegen der Schwerkraftrichtung gerichtet. Der Gasstrom ist gemäß dieser bevorzugten Ausführungsform ferner so eingerichtet, dass die Kaolin-Partikel der ersten Fraktion zumindest teilweise mit dem Gasstrom mitgerissen werden, während die Partikel der zweiten Fraktion entgegen oder aus dem Gasstrom nach unten fallen. Der Gasstrom kann durch ein Gebläse erzeugt und durch geeignete Leitmittel (Einhausung der Vorrichtung, Leitbleche usw.) so gelenkt werden, dass die Trennung der ersten Fraktion von der zweiten Fraktion erfolgt. Hierbei können die Strömungsparameter, wie etwa Volumenstrom, Strömungsgeschwindigkeit oder dergleichen, für die Abtrennung des Kaolins von der zweiten Fraktion optimiert werden. Die Trennbarkeit mittels eines Gasstroms ist durch die unterschiedlichen Massen bzw. Dichten der Partikel der beiden Fraktionen gegeben. Somit kann eine zuverlässige sowie energie- und ressourcenschonende Trennung realisiert werden.

Vorzugsweise weist der Mahlabschnitt auf: einen drehbaren Mahlteller mit einer Tellermahlfläche und zumindest eine, vorzugsweise mehrere, ebenfalls drehbare, zylinderförmige Mahlwalze mit einer Walzenmahlfläche, die dem Mahlteller zugewandt und um einen Spalt von der Tellermahlfläche beabstandet ist. Auf diese Weise wird eine Mühle implementiert, die für den Aufschluss des Rohkaolins geeignet, sowie baulich kompakt ist und zuverlässig betrieben werden kann. Die Mahlwalzen befinden sich vorzugsweise im Bereich des Außenumfangs des Mahltellers. Ferner sind die Walzenmahlflächen vorzugsweise abgeschrägt, d.h. sie stehen vorzugsweise nicht senkrecht auf der Zylinderachse der zugehörigen Mahlwalze.

Vorzugsweise ist der Spalt einstellbar. Dies ist kann durch eine geeignete Lagerung der Mahlwalzen realisiert werden, so dass deren Positionen und/oder Lagen relativ zum Mahlteller und/oder der Anpressdruck der Mahlwalzen auf den Mahlteller veränderlich bzw. einstellbar sind. Auf diese Weise ist eine selektive Zerkleinerung erzielbar, wodurch es mit einer anschließenden Sichtung möglich ist, auf effektive Weise eine Kaolin-/Quarztrennung durchzuführen. Weiterhin kann durch Einstellen der Prozessparameter, wie etwa Anpressdruck der Mahlwalzen, Massenstrom des Mahlguts, Volumenstrom zum Sichter, Trocknungstemperatur usw., eine optimale Klassierung bzw. Siebung des Kaolins erreicht werden.

Der Mahlteller und die Mahlwalzen arbeiten für ein optimales Zerkleinern und Trennen vorzugsweise wie folgt zusammen: Zunächst wird der Rohkaolin auf die Tellermahlfläche aufgegeben. Aufgrund der Rotation des Mahltellers wird das Rohkaolin nach außen transportiert und gerät anschließend in den Spalt zwischen der Tellermahlfläche und der Walzenmahlfläche, die sich vorzugsweise entgegengesetzt drehen, wodurch das Rohkaolin zermahlen und die erste Fraktion zumindest teilweise aus dem Rohkaolin herausgelöst wird.

Vorzugsweise weist die Mahl- und Trennungsvorrichtung einen zweiten Trennungsabschnitt auf, in dem eine Selektion der ersten Fraktion nach Partikelgröße stattfindet. In anderen Worten, mittels des zweiten Trennungsabschnitts lässt sich die Feinheit der Partikel der ersten Fraktion, d.h. die Feinheit der Kaolin-Partikel, einstellen.

Zu diesem Zweck weist der zweite Trennungsabschnitt vorzugsweise eine oder mehrere Ablenkplatten und einen Sichter auf, der beispielsweise ein Stabkorbsichter ist. Der Sichter hat eine Auffangkammer und einen oder mehrere siebartige Außenwandabschnitte mit mehreren Öffnungen, durch die ein Teil der Partikel der ersten Fraktion hindurchtreten kann, um in die Auffangkammer zu gelangen, während ein anderer Teil der Partikel der ersten Fraktion von den Außenwandabschnitten des Sichters sowie den Ablenkplatten abgelenkt und zurück in den Mahlabschnitt geleitet wird. Die Beschaffenheit des Sichters, insbesondere dessen Öffnungen, bestimmt somit die herauszufilternden Partikelgrößen. Kaolin-Partikel der gewünschten Größen gelangen in die Auffangkammer, während Partikel zu großer Durchmesser einen weiteren Mahlvorgang durchlaufen.

Vorzugsweise ist der Gasstrom, der die Partikel der ersten Fraktion aufgrund des geringen Gewichts nach oben mitreißt, auf den Sichter gerichtet, wodurch die Selektion nach Partikelgröße besonders wirksam und zuverlässig durchführbar ist. Vorzugsweise ist der Sichter rotierbar vorgesehen, wobei die Drehzahl einstellbar ist, wodurch sich auf einfache Weise die gewünschte Feinheit der herauszufilternden Partikel der ersten Fraktion einstellen lässt.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitende Zeichnung.

### Kurze Beschreibung der Figur

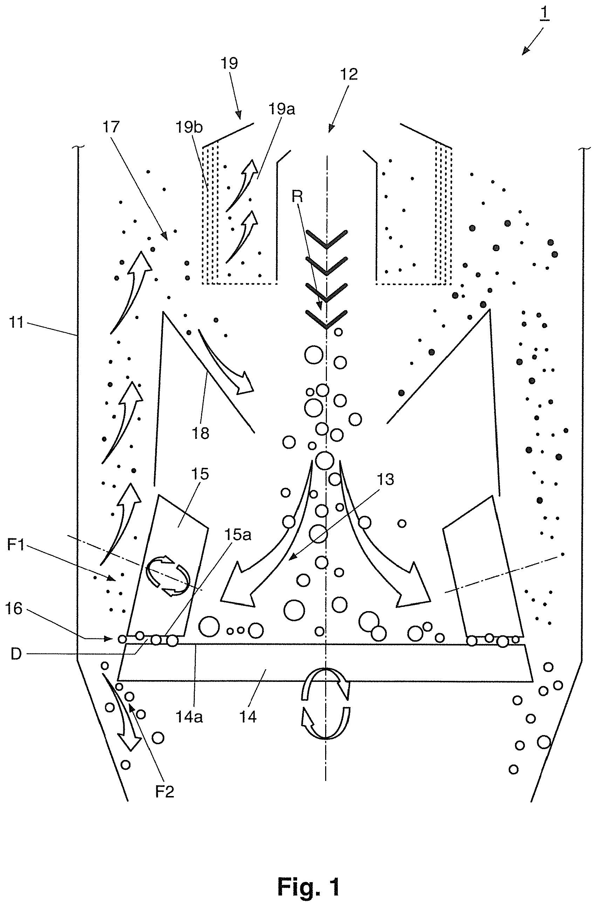

Die Figur 1 ist eine schematische Darstellung einer Mahl- und Trennungsvorrichtung zur Trockenaufbereitung von Kaolin.

### Detaillierte Beschreibung bevorzugter Ausführungsbeispiele

Im Folgenden werden bevorzugte Ausführungsbeispiele anhand der Figur beschrieben.

Die Figur 1 ist eine schematische Darstellung einer Mahl- und Trennungsvorrichtung 1 zur Trockenaufbereitung von Kaolin.

Die Mahl- und Trennungsvorrichtung 1 weist einen durch eine Einhausung 11 definierten Innenraum und einen Zufuhrabschnitt 12 auf, über den das Rohkaolin R, das ein Gemisch aus zumindest Kaolin und Quarz ist, dem Innenraum zugeführt wird. Im Beispiel der Figur 1 hat die Mahl- und Trennungsvorrichtung 1 ungefähr einen axialsymmetrischen Aufbau, wobei sich der Zufuhrabschnitt 12 zentral im oberen Bereich der Vorrichtung befindet, so dass das Rohkaolin R im Wesentlichen zentral in Schwerkraftrichtung in den Innenraum der Mahl- und Trennungsvorrichtung 1 hineinbefördert wird. Allerdings kann der Zufuhrabschnitt 12 auch seitlich oder auf andere Weise angeordnet sein, so lange das Rohkaolin R in den Innenraum gelangt und der weiteren Bearbeitung zuführbar ist.

Die Mahl- und Trennungsvorrichtung 1 weist ferner einen Mahlabschnitt 13 auf, der im Ausführungsbeispiel der Figur 1 einen drehbaren Mahlteller 14 mit einer Tellermahlfläche 14a und mehrere ebenfalls drehbare, zylinderförmige Mahlwalzen 15 umfasst. Die zylinderförmigen Mahlwalzen 15 weisen jeweils eine abgeschrägte Walzenmahlfläche 15a auf, die dem Mahlteller 14 zugewandt und um einen Spalt D von der Tellermahlfläche 14a beabstandet ist. Die Mahlwalzen 15 befinden sich im Bereich des Außenumfangs des Mahltellers 14 und wirken mit dem Mahlteller 14 wie folgt zusammen:
Der über den Zufuhrabschnitt 12 zugeführte Rohkaolin R fällt auf den Mahlteller 14 und wird aufgrund der Rotation desselben nach außen transportiert. Der Rohkaolin R gerät in den Spalt D zwischen den beiden Mahlflächen 14a und 15a, die sich vorzugsweise entgegengesetzt drehen. Auf diese Weise wird der Rohkaolin R zermahlen, wodurch eine Trennung in eine erste Fraktion F1, die eine feine bzw. leichte Fraktion ist, und eine zweite Fraktion F2, die relativ zur ersten Fraktion F1 eine schwere bzw. grobe Fraktion ist, erfolgt. Die zweite F2 umfasst zumindest Quarz; die erste Fraktion F1 besteht im Wesentlichen aus dem herausgelösten Kaolin.

Die Mahlwalzen 15 sind vorzugsweise individuell einstellbar. Insbesondere ist der Spalt D vorzugsweise veränderlich, um den Anpressdruck beim Zermahlen variieren zu können. Ferner können die Rotationsgeschwindigkeit, Position und/oder Lage der Mahlwalzen 15 individuell oder gruppenweise, und/oder die Rotationsgeschwindigkeit, Position und/oder Lage des Mahltellers 14 einstellbar eingerichtet sein.

Nachdem die Partikel der ersten und zweiten Fraktion F1, F2 den Spalt D in Radialrichtung des Mahltellers 14 nach außen verlassen haben, gelangen diese in einen Gasstrom, vorzugsweise Luftstrom, dessen Strömungsparameter, etwa Volumenstrom, Strömungsgeschwindigkeit oder dergleichen, so eingestellt sind, dass eine Trennung der ersten Fraktion F1 von der zweiten Fraktion F2 erfolgt. Der Gasstrom kann beispielsweise durch ein nicht dargestelltes Gebläse erzeugt werden. Partikel der zweiten Fraktion F2 fallen am Mahlteller 14 vorbei nach unten und werden ausgeschleust (nicht dargestellt), und Partikel der ersten Fraktion F1 werden durch den Gasstrom nach oben mitgerissen, wie es durch Pfeile in der Figur 1 dargestellt ist. Die Trennung der ersten Fraktion F1 von der zweiten Fraktion F2 erfolgt in einem Abschnitt, der hierin als erster Trennungsabschnitt 16 bezeichnet ist.

Die Mahl- und Trennungsvorrichtung 1 weist ferner einen zweiten Trennungsabschnitt 17 auf, mit dem sich die Feinheit der Partikel der ersten Fraktion F1, d.h. die Feinheit der Kaolin-Partikel, einstellen lässt. Zu diesem Zweck umfasst der zweite Trennungsabschnitt 17 Ablenkplatten 18 und einen drehbaren Sichter 19, der vorzugsweise ein Stabkorbsichter ist. Der Stabkorbsichter 19 ist eine zylindrische oder hohlzylindrische Komponente, die eine Auffangkammer 19a und einen oder mehrere siebartige Außenwandabschnitte 19b aufweist. Die Außenwandabschnitte 19b befinden sich zumindest abschnittsweise am Außenumfang des Stabkorbsichters 19 und weisen mehrere Öffnungen, Schlitze oder dergleichen auf, durch welche Partikel bestimmter Größe hindurchtreten können. Der Gasstrom, der die Partikel der ersten Fraktion F1 aufgrund des geringen Gewichts nach oben mitreißt, ist somit vorzugsweise auf den Stabkorbsichter 19 gerichtet. Ein Teil der Partikel der ersten Fraktion F1 gelangt durch die siebartigen Außenwandabschnitte 19b in den Auffangraum 19a, aus dem das herausgelöste und auf den gewünschten Zerkleinerungsgrad zermahlene Kaolin abgeführt werden kann. Ein anderer Teil der Partikel, im Wesentlichen Partikel mit zu großem Durchmesser, wird von den Außenwandabschnitten 19b "zurückgeworfen" und fällt abseits des Hauptgasstroms nach unten. Die Ablenkplatten 18 sind so eingerichtet, dass die vom Stabkorbsichter 19 abgewiesenen Partikel zurück auf den Mahlteller 14 fallen und sich mit dem Aufgabegut vom Zufuhrabschnitt 12 vermischen. Mittels der Drehzahl des Sichters 18 lässt sich die Feinheit der Partikel der ersten Fraktion F1, d.h. des aufbereiteten Kaolins, einstellen.

Der trockene Aufschluss bzw. die Trockenaufbereitung des Rohkaolins mit Hilfe der Mahl- und Trennungsvorrichtung 1 kommt vollständig ohne eine aufwendige Nassphase aus. Bei der Mahl- und Trennungsvorrichtung 1 kann der Anpressdruck der Mahlwalzen 15 so variiert werden, dass eine selektive Zerkleinerung erzielbar ist. Durch eine solche selektive Zerkleinerung ist es mit einer anschließenden Sichtung möglich, eine Kaolin-/Quarztrennung durchzuführen. Weiterhin kann durch Einstellung der Prozessparameter, wie etwa Anpressdruck der Mahlwalzen 15, Massenstrom des Mahlguts, Volumenstrom zum Sichter 19, Trocknungstemperatur usw., eine optimale Klassierung bzw. Siebung des Kaolins erreicht werden.

Bei der Aufbereitung des Kaolins, bis hin zur Herstellung hochreinen Aluminiumoxyds, können diverse Prozessschritte entfallen, so etwa die Filtration und die Kalzinierung/Trocknung des Produkts. Dadurch lässt sich eine deutliche Vereinfachung des Aufbereitungsprozesses realisieren. Das Verfahren unter Verwendung der Mahl- und Trennungsvorrichtung 1 ist energie- und ressourcenschonend sowie kostengünstig durchführbar.

Soweit anwendbar können alle einzelnen Merkmale, die in den Ausführungsbeispielen dargelegt sind, miteinander kombiniert und/oder ausgetauscht werden, ohne den Bereich der Erfindung zu verlassen.

### Bezugszeichenliste

- 1: Mahl- und Trennungsvorrichtung
- 11: Einhausung
- 12: Zufuhrabschnitt
- 13: Mahlabschnitt
- 14: Mahlteller
- 14a: Tellermahlfläche
- 15: Mahlwalze
- 15a: Walzenmahlfläche
- 16: Erster Trennungsabschnitt
- 17: Zweiter Trennungsabschnitt
- 18: Ablenkplatte
- 19: Sichter
- 19a: Auffangkammer
- 19b: Außenwandabschnitt

- R: Rohkaolin
- D: Spalt
- F1: Erste Fraktion
- F2: Zweite Fraktion

## Patentansprüche

1. Verfahren zur Aufbereitung von Rohkaolin (R) in einer Mahl- und Trennungsvorrichtung (1), die einen Mahlabschnitt (13) und einen ersten Trennungsabschnitt (16) aufweist, wobei
der Rohkaolin (R) eine Stoffmischung aus zumindest Kaolin als eine erste Fraktion (F1) und einer zumindest Quarz umfassenden zweiten Fraktion (F2) ist,
das Rohkaolin (R) dem Mahlabschnitt (13) zugeführt wird, in dem die erste Fraktion (F1) durch Zermahlen zumindest teilweise aus dem Rohkaolin (R) herausgelöst wird, und
anschließend im ersten Trennungsabschnitt (16) die erste Fraktion (F1) von der zweiten Fraktion (F2) getrennt wird,
**dadurch gekennzeichnet, dass**
die Aufbereitung ohne Herstellung einer Suspension aus dem Rohkaolin (R) erfolgt.

2. Verfahren nach Anspruch 1, **dadurch gekennzeichnet, dass** die Trennung im ersten Trennungsabschnitt (16) mittels eines Gasstroms, vorzugsweise Luftstroms, erfolgt, der eine Komponente entgegen der Schwerkraftrichtung aufweist und so eingerichtet ist, dass die Partikel der ersten Fraktion (F1) zumindest teilweise mit dem Gasstrom mitgerissen werden, während die Partikel der zweiten Fraktion (F2) entgegen oder aus dem Gasstrom nach unten fallen.

3. Verfahren nach Anspruch 1 oder 2, **dadurch gekennzeichnet, dass** der Mahlabschnitt (13) einen drehbaren Mahlteller (14) mit einer Tellermahlfläche (14a) und zumindest eine ebenfalls drehbare, zylinderförmige Mahlwalze (15) mit einer Walzenmahlfläche (15a), die dem Mahlteller (14) zugewandt und um einen Spalt (D) von der Tellermahlfläche (14a) beabstandet ist, aufweist.

4. Verfahren nach Anspruch 3, **dadurch gekennzeichnet, dass** der Spalt (D) einstellbar ist, wobei vorzugsweise die Positionen und/oder Lagen der Mahlwalzen (15) relativ zum Mahlteller (14) und/oder der Anpressdruck der Mahlwalzen (15) auf den Mahlteller (14) einstellbar sind.

5. Verfahren nach Anspruch 3 oder 4, **dadurch gekennzeichnet, dass** der Rohkaolin (R) auf die Tellermahlfläche (14a) aufgegeben wird, aufgrund der Rotation des Mahltellers (14) nach außen transportiert wird und anschließend in den Spalt (D) zwischen der Tellermahlfläche (14a) und der Walzenmahlfläche (15a), die sich vorzugsweise entgegengesetzt drehen, gerät, wodurch das Rohkaolin (R) zermahlen und die erste Fraktion (F1) zumindest teilweise aus dem Rohkaolin (R) herausgelöst wird.

6. Verfahren nach einem der vorigen Ansprüche, **dadurch gekennzeichnet, dass** die Mahl- und Trennungsvorrichtung (1) einen zweiten Trennungsabschnitt (17) aufweist, in dem eine Selektion der ersten Fraktion (F1) nach Partikelgröße stattfindet.

7. Verfahren nach Anspruch 6, **dadurch gekennzeichnet, dass** der zweite Trennungsabschnitt (17) eine oder mehrere Ablenkplatten (18) und einen Sichter (19), der vorzugsweise ein Stabkorbsichter ist, aufweist, wobei
der Sichter eine Auffangkammer (19a) und einen oder mehrere siebartige Außenwandabschnitte (19b) mit mehreren Öffnungen aufweist, durch die ein Teil der Partikel der ersten Fraktion (F1) hindurchtreten kann, um in die Auffangkammer (19a) zu gelangen, während ein anderer Teil der Partikel der ersten Fraktion (F1) von den Außenwandabschnitten (19b) des Sichters (19) sowie den Ablenkplatten (18) abgelenkt und zurück in den Mahlabschnitt (13) geleitet wird.

8. Verfahren nach Anspruch 2 und Anspruch 7, **dadurch gekennzeichnet, dass** der Gasstrom auf den Sichter (19) gerichtet ist.

9. Verfahren nach Anspruch 7 oder 8, **dadurch gekennzeichnet, dass** der Sichter (19) rotierbar ist, vorzugsweise mit einstellbarer Drehzahl.

## Claims

1. Method for preparation of raw kaolin (R) in a milling and separating device (1) which has a milling section (13) and a first separating section (16), wherein
the raw kaolin (R) is a material mixture of at least kaolin as a first fraction (F1) and a second fraction (F2) comprising at least quartz,
the raw kaolin (R) is fed to the milling section (13), in which the first fraction (F1) is extracted at least in part from the raw kaolin (R) by pulverising, and
the first fraction (F1) is subsequently separated from the second fraction (F2) in the first separating section (16),
**characterised in that**
the preparation is carried out without production of a suspension of the raw kaolin (R).

2. Method according to claim 1, **characterised in that** the separation in the first separating section (16) is carried out by means of a gas flow, preferably an air flow, which has a component opposite to the direction of gravitational force and is so arranged that the particles of the first fraction (F1) are carried away at least in part by the gas flow whilst the particles of the second fraction (F2) drop down against or out of the gas flow.

3. Method according to claim 1 or 2, **characterised in that** the milling section (13) comprises a rotatable grinding table (14) with a grinding table surface (14a) and at least one similarly rotatable, cylindrical grinding roll (15) with a roll grinding surface (15a), which faces the grinding table (14) and is spaced from the grinding table surface (14a) by a gap (D).

4. Method according to claim 3, **characterised in that** the gap (D) is adjustable, wherein the positions and/or locations of the grinding rolls (15) relative to the grinding table (14) and/or the contact pressure of the grinding rolls (15) on the grinding table (14) are preferably adjustable.

5. Method according to claim 3 or 4, **characterised in that** the raw kaolin (R) is delivered to the table grinding surface (14a), is transported outwardly due to the rotation of the grinding table (14) and subsequently enters the gap (D) between the table grinding surface (14a) and the roll grinding surface (15a), which preferably rotate in opposite sense, whereby the raw kaolin (R) is pulverised and the first fraction (F1) is extracted at least in part from the raw kaolin (R).

6. Method according to any one of the preceding claims, **characterised in that** the milling and separating device (1) has a second separating section (17), in which a selection of the first fraction (F1) according to particle size takes place.

7. Method according to claim 6, **characterised in that** the second separating section (17) comprises one or more deflecting plates (18) and a sifter (19), which is preferably a rod basket sifter, wherein the sifter has a collecting chamber (19a) and one or more sieve-like outer wall sections (19b) with a plurality of openings through which a part of the particles of the first fraction (F1) can pass so as to enter the collecting chamber (19a), whilst another part of the particles of the first fraction (F1) is deflected by the outer wall sections (19b) of the sifter (19) as well as the deflecting plates (18) and conducted back into the milling section (13).

8. Method according to claim 2 and claim 7, **characterised in that** the gas flow is directed towards the sifter (19).

9. Method according to claim 7 or 8, **characterised in that** the sifter (19) is rotatable, preferably at an adjustable rotational speed.

## Revendications

1. Procédé destiné à la préparation de kaolin brut (R) dans un dispositif de broyage et de séparation (1) qui présente une partie (13) destinée à un broyage et une première partie (16) destinée à une séparation ; dans lequel
le kaolin brut (R) représente un mélange de matières premières constitué par au moins du kaolin sous la forme d'une première fraction (F1) et par au moins une deuxième fraction (F2) qui comprend du quartz ;
on achemine le kaolin brut (R) à la partie (13) destinée au broyage, dans laquelle on extrait par isolement la première fraction (F1) par l'intermédiaire d'un broyage, au moins en partie, à partir du kaolin brut (R) ; et
on sépare ensuite, dans la première partie (16) destinée à une séparation, la première fraction (F1) par rapport à la deuxième fraction (F2) ;
**caractérisé**
**en ce que** la préparation a lieu en l'absence de la formation d'une suspension à partir du kaolin brut (R).

2. Procédé selon la revendication 1, **caractérisé en ce que** la séparation dans la première partie (16) destinée à une séparation, a lieu au moyen d'un courant de gaz, de préférence d'un courant d'air qui présente une composante qui est orientée à l'encontre de la direction de la pesanteur et qui est conçue d'une manière telle que les particules de la première fraction (F1) sont entraînées au moins en partie avec le courant de gaz, tandis que les particules de la deuxième fraction (F2) tombent vers le bas à l'encontre du courant de gaz ou hors de ce dernier.

3. Procédé selon la revendication 1 ou 2, **caractérisé en ce que** la partie (13) destinée au broyage présente un plateau de broyage rotatif (14) qui comprend une surface de plateau (14a) destinée au broyage et au moins un rouleau de broyage (15) de forme cylindrique, également rotatif, qui comprend une surface de rouleau (15a) destinée au broyage qui est tournée vers le plateau de broyage (14) et qui est distancée, à concurrence d'un interstice (D), de la surface de plateau (14a) destinée au broyage.

4. Procédé selon la revendication 3, caractérisé en en ce que l'interstice (D) peut être réglé ; dans lequel on peut régler de préférence les positions et/ou les emplacements des rouleaux de broyage (15) par rapport aux plateaux de broyage (14) et/ou la pression de compression exercée par les rouleaux de broyage (15) sur les plateaux de broyage (14).

5. Procédé selon la revendication 3 ou 4, **caractérisé en ce que** : le kaolin brut (R) est alimenté sur la surface de plateau (14a) destinée au broyage ; sur base de la rotation du plateau de broyage (14) est transporté vers l'extérieur; et aboutit enfin dans l'interstice (D) ménagé entre la surface de plateau (14a) destinée au broyage et la surface de rouleau (15a) destinée au broyage, qui tournent de préférence dans des sens opposés, d'une manière telle que l'on obtient un broyage du kaolin brut (R) et une extraction de la première fraction (F1) par isolement au moins en partie à partir du kaolin brut (R).

6. Procédé selon l'une quelconque des revendications précédentes, **caractérisé en ce que** le dispositif de broyage et de séparation (1) présente une deuxième partie (17) destinée à une séparation, dans laquelle a lieu une sélection de la première fraction (F1) en ce qui concerne la granulométrie.

7. Procédé selon la revendication 6, **caractérisé en ce que** la deuxième partie (17) destinée à une séparation présente une ou plusieurs plaques de déviation (18) et un classificateur (19) qui représente de préférence un classificateur du type d'un panier à barres ; dans lequel le classificateur présente une chambre de récolte (19a) et un ou plusieurs parties en forme de parois externes sous la forme de tamis (19b), qui présente(nt) plusieurs ouvertures à travers lesquelles peuvent passer une partie des particules de la première fraction (F1) pour aboutir dans la chambre de récolte (19a), tandis que une autre partie des particules de la première fraction (F1) sont déviées par rapport aux parties en forme de parois externes (19b) du classificateur (19) et par rapport aux plaques de déviation (18) et sont renvoyées dans la partie (13) destinée au broyage.

8. Procédé selon la revendication 2 et selon la revendication 7, **caractérisé en ce que** le courant de gaz est orienté en direction du classificateur (19).

9. Procédé selon la revendication 7 ou 8, **caractérisé en ce que** le classificateur (19) est rotatif, de préférence avec une vitesse de rotation qui peut être réglée.
